# EUROPEAN PATENT APPLICATION

(11) **EP 2 981 139 A1**
(43) Date of publication of application: **03.02.2016**
(21) Application number: 13879993.7
(22) Date of filing: 28.03.2013
(51) Int. Cl.: H04W 72/04, H04W 16/32

(54) **COMMUNICATION TERMINAL AND BASE STATION**

(71) Applicant: FUJITSU LIMITED, Kawasaki-shi Kanagawa 211-8588 (JP)
(72) Inventor: TANAKA, Yoshinori, Kawasaki-shi Kanagawa 211-8588 (JP)
(74) Representative: Wilding, Frances Ward
(86) International application number: PCT/JP2013/059420
(87) International publication number: WO 2014/155638

(57) **Abstract**

A control unit (11) of a terminal (10) selects a desired mode from a carrier aggregation mode in which the terminal (10) is connected to a first cell under the connection and a second cell at the same time and a stand-alone communication mode in which the terminal (10) releases the connection to the first cell and is connected only to the second cell based on a state of the terminal (10). A radio unit (12) transmits information on the selected desired mode to a base station corresponding to the first cell.

## Description

### [Technical Field]

The present invention relates to a communication terminal and a base station.

### [Background Art]

Traditionally, various efforts have been made in order to increase a transmission capacity (may be referred to as "system capacity" below) in a communication system. For example, in the 3rd generation partnership project radio access network long term evolution (3GPP LTE), a technology to increase the system capacity by effectively using a "small cell" in addition to a "macro cell" has been discussed. Here, a "cell" is defined based on a "communication area" and a "channel frequency" of a single base station. The "communication area" may be a whole area where radio waves transmitted from the base station arrive (may be referred to as "coverage area" below) and may be a divided area in which the coverage area is divided (so-called sector). Also, the "channel frequency" is a unit of a frequency to be used for the communication by the base station and defined based on a center frequency and a bandwidth. Also, the channel frequency is a part of an "operating band" allocated to the whole system. The "macro cell" is a cell of a base station which can transmit a high transmitting power, that is, a base station having a large coverage area. Also, the "small cell" is a cell of a base station which transmits a low transmitting power, that is, a base station having a small coverage area.

Also, in recent years, a communication to use a plurality of frequency bands has been considered to achieve a wider bandwidth. For example, in a 3rd generation partnership project radio access network long term evolution (3GPP LTE)-advanced which is a communication standard, a technology called carrier aggregation (CA) was adopted. The CA is a communication technology for using a plurality of component carriers. In other words, the carrier aggregation is a technology which can communicate by using different frequency bands at the same time. That is, the CA is a communication technology for using a plurality of cells. Here, the component carrier means a unit of the frequency band which can be used for the communication. The component carrier may be expressed as "CC" below. Also, the carrier aggregation may be expressed as "CA" below.

### [Citation List]

### [Non Patent Citation]

Non Patent Document 1: 3GPP TSG RAN WG1 Meeting, R1-130659, "Scenario and Migration for Small Cell Enhancement," January 2013

### [Summary of Invention]

### [Technical Problem]

In addition to the above-mentioned CA, there is a communication performed by connecting a communication terminal (may be simply referred to as "terminal" below) to a single cell (may be referred to as "stand-alone communication" below). According to a state of the terminal, the CA may be more advantageous for the communication than the stand-alone communication, and also, the stand-alone communication may be more advantageous for the communication than the CA.

However, the state of the terminal has not been considered in the related art. Therefore, the terminal uses a disadvantageous communication system. As a result, there is a possibility that communication resources are inefficiently allocated.

The technique according to the disclosure has been made in consideration of the above. A purpose of the disclosure is to provide a communication terminal and a base station which realize efficient allocation of communication resources by switching a mode of the terminal by considering a state of the terminal.

### [Solution to Problem]

According to embodiments of the disclosure, a communication terminal selects a desired mode from a first mode in which the communication terminal is connected to a first cell under the connection and a second cell at the same time and a second mode in which the communication terminal releases the connection to the first cell and is connected only to the second cell based on a state of the communication terminal. The communication terminal transmits information on the selected desired mode to a base station corresponding to the first cell.

### [Advantageous Effects of Invention]

According to embodiments of the disclosure, efficient allocation of communication resources can be realized.

### [Brief Description of Drawings]

FIG. 1 is a diagram of an exemplary communication system according to a first embodiment.
FIG. 2 is a diagram of an exemplary terminal according to the first embodiment.
FIG. 3 is a diagram of an exemplary base station according to the first embodiment.
FIG. 4 is a diagram of an exemplary hardware configuration of the terminal.
FIG. 5 is a diagram of an exemplary hardware configuration of the base station.

### [Embodiments for Carrying Out the Invention]

Embodiments of a communication terminal and a base station according to the present disclosure will be described in detail below with reference to the drawings. The communication terminal and the base station according to the present disclosure are not limited to the embodiments. Also, components having the same functions are respectively denoted with the same references in the embodiments, and overlapped description will be omitted.

### [First embodiment]

### [Outline of communication system]

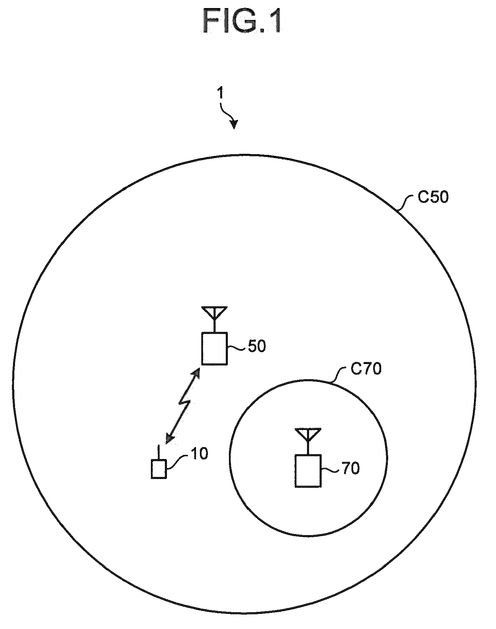

FIG. 1 is a diagram of an exemplary communication system according to a first embodiment. In FIG. 1, a communication system 1 includes a terminal 10 and base stations 50 and 70. In FIG. 1, a macro cell C50 is defined by a coverage area of the base station 50 and a first channel frequency. Also, a small cell C70 is defined by a coverage area of the base station 70 and a second channel frequency. A case where the small cell C70 is overlapped with the macro cell C50 is illustrated in FIG. 1 as an example. Also, the first and second channel frequencies may be the same and may be different from each other. Also, the number of the terminals 10 and the base stations 50 and 70 illustrated in FIG. 1 is an example and is not limited to this. That is, for example, the communication system 1 may include a plurality of macro cells C50 and a plurality of small cells C70 which is respectively overlapped with macro cell C50.

A different cell ID (for example, physical cell identification (PCI)) is allocated to each macro cell C50. Also, it is assumed here that a different cell ID be allocated to each small cell C70.

The base station 50 transmits a common reference signal (CRS) and a synchronisation signal (primary synchronisation signal (PSS) and secondary synchronisation signal (SSS)) which are specific to a cell ID allocated to a cell of the base station 50. Also, the base station 70 transmits the common reference signal and the synchronisation signal which are specific to a cell ID allocated to a cell of the base station 70.

It is assumed that the terminal 10 have already established a communication line between the base station 50 and the terminal 10, that is, the terminal 10 be connected to the macro cell C50. The terminal 10 selects a "desired mode" from a first mode to be concurrently connected to other cell (for example, small cell C70) in addition to the macro cell C50 which is connected to the terminal 10 and a second mode to release the connection to the macro cell C50 and to be connected to the other cell based on its "state". Here, the terminal 10 selects a mode to contribute to efficient allocation of communication resources of the system according to its state. In the following description, the first mode is referred to as "CA mode", and the second mode is referred to as "stand-alone (SA) communication mode". Also, a parameter regarding the "state" of the terminal 10 (may be referred to as "state parameter" below) is, for example, a moving speed of the terminal 10, traffic characteristics of a signal to be transmitted by the terminal 10, a device type of the terminal 10 or a mounting function of the terminal 10 or any combination thereof.

The terminal 10 transmits (notify) information on the selected desired mode to the base station 50 corresponding to the macro cell C50 which is connected to the terminal 10.

Also, the terminal 10 receives the common reference signal transmitted in the macro cell C50 or the small cell C70 where the terminal 10 exists. The terminal 10 specifies the cell ID corresponding to each common reference signal and measures a received power value of each common reference signal based on each received common reference signal. The terminal 10 corresponds the specified cell ID and the measured received power value and transmits (notify) it to the base station 50 corresponding to the macro cell C50 which is connected to the terminal 10.

The base station 50 which is connected to the terminal 10 receives the cell ID and the received power value from the terminal 10 and determines "use mode" which is actually used by the terminal 10 based on the received power value and the "desired mode" notified from the terminal 10. The use mode is one of the above-mentioned "CA mode" and "stand-alone communication mode".

When the use mode has been determined as the CA mode, the base station 50 obtains line setting information from the base station 70 corresponding to the small cell C70 where the terminal 10 exists via the network and transmits (notify) the obtained line setting information and use mode notification information to the terminal 10. The use mode notification information here indicates the CA mode. Also, the line setting information includes, for example, a random access preamble. The terminal 10 is connected to the small cell C70 by using the line setting information transmitted from the base station 50. Accordingly, the terminal 10 can be concurrently connected to the macro cell C50 and the small cell C70 and can transmit/receive a user data.

On the other hand, when the use mode has been determined as the SA communication mode, the base station 50 obtains the line setting information from the base station 70 corresponding to the small cell C70 where the terminal 10 exists via the network and transmits (notify) the obtained line setting information and the use mode notification information to the terminal 10. The use mode notification information here indicates the SA communication mode. The terminal 10 is connected to the small cell C70 by using the line setting information transmitted from the base station 50 and releases the connection to the macro cell C50. That is, the terminal 10 performs handover from the macro cell C50 to the small cell C70.

As described above, the terminal 10 selects a desired mode which contributes to the efficient allocation of the communication resource of the system according to the state of the terminal 10 and notifies the base station 50 which is connected to the terminal 10 of the selected desired mode. Since the base station 50 performs communication control of the terminal 10 in consideration of the desired mode of the terminal 10, the communication resources can be efficiently allocated.

### [Exemplary structure of terminal]

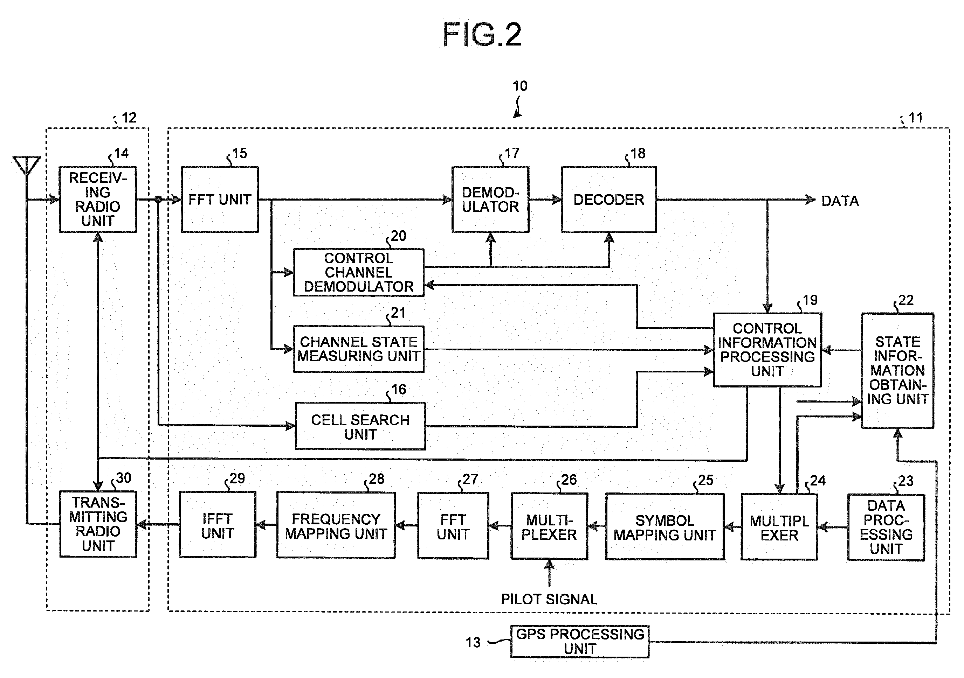

FIG. 2 is a diagram of an exemplary terminal according to the first embodiment. In FIG. 2, the terminal 10 includes a control unit 11, a radio unit 12, and a global positioning system (GPS) processing unit 13. The control unit 11 includes a fast fourier transform (FFT) unit 15, a cell search unit 16, a demodulator 17, a decoder 18, a control information processing unit 19, a control channel demodulator 20, a channel state (CS) measuring unit 21, and a state information obtaining unit 22. Also, the control unit 11 includes a data processing unit 23, a multiplexer 24, a symbol mapping unit 25, a multiplexer 26, a FFT unit 27, a frequency mapping unit 28, an inverse fast fourier transform (IFFT) unit 29. The radio unit 12 includes a receiving radio unit 14 and a transmitting radio unit 30.

The receiving radio unit 14 performs predetermined receiving radio processing such as downconversion and analog/digital conversion relative to a reception signal received via an antenna and outputs the reception signal to which the receiving radio processing has been performed to the FFT unit 15 and the cell search unit 16.

The cell search unit 16 specifies the cell ID corresponding to the common reference signal or the synchronisation signal based on the common reference signal or the synchronisation signal included in the reception signal to which the receiving radio processing has been performed. That is, the cell search unit 16 specifies the cell ID of the macro cell C50 or the small cell C70 where the terminal 10 exists. The cell search unit 16 outputs the specified cell ID to the control information processing unit 19. The number of the cells ID to be specified may be one and may be plural.

The FFT unit 15 performs fast Fourier transform processing relative to the reception signal to which the receiving radio processing has been performed and outputs the reception signal to which the fast Fourier transform processing has been performed to the demodulator 17 and the channel state measuring unit 21.

The demodulator 17 receives resource allocation information from the control channel demodulator 20 and demodulates a signal mapped to the resource corresponding to the resource allocation information in the reception signal received from the FFT unit 15. Then, the demodulator 17 outputs the demodulated reception signal to the decoder 18.

The decoder 18 receives the resource allocation information from the control channel demodulator 20 and decodes the signal mapped to the resource corresponding to the resource allocation information in the reception signal received from the demodulator 17. Then, the decoder 18 outputs the obtained reception data.

The control channel demodulator 20 receives a radio network temporary ID (RNTI) from the control information processing unit 19 and searches for control information addressed to the terminal 10 in a part corresponding to a search space in a PDCCH region indicated by the RNTI in the reception signal received from the FFT unit 15. When the resource allocation information addressed to the terminal 10 has been found, the control channel demodulator 20 outputs the resource allocation information to the demodulator 17 and the decoder 18.

The channel state measuring unit 21 measures a received power of the common reference signal included in the reception signal received from the FFT unit 15 and outputs the measured received power value of the common reference signal to the control information processing unit 19. That is, the channel state measuring unit 21 measures the received power of the common reference signal transmitted in the macro cell C50 or the small cell C70 where the terminal 10 exists.

The control information processing unit 19 extracts the RNTI, which is transmitted from the base station 50, from the reception data output by the decoder 18 and outputs the extracted RNTI to the control channel demodulator 20.

Also, the control information processing unit 19 outputs the cell ID received from the cell search unit 16 and the received power value of the common reference signal received from the channel state measuring unit 21 to the multiplexer 24. According to this, the control information processing unit 19 transmits the cell ID and the received power value of the common reference signal to the base station 50.

Also, the control information processing unit 19 receives the state parameter from the state information obtaining unit 22 and selects the desired mode based on the state parameter. As described above, the mode of the terminal 10 includes the CA mode and the SA communication mode. The control information processing unit 19 selects the desired mode from the CA mode and the SA communication mode based on the state parameter. A state information parameter and selection of the desired mode by using the state information parameter will be described in detail below.

Also, the control information processing unit 19 extracts radio resource control (RRC) information transmitted from the base station 50 from the reception data output by the decoder 18. The radio resource control information includes the line setting information and the use mode notification information. The control information processing unit 19 controls the channel frequency used by the radio unit 12 according to the use mode notification information and performs a radio line establishing procedure with the base station 70 corresponding to the small cell C70 to which a new line is established by using the line setting information.

Specifically, when the use mode notification information indicates the CA mode, the control information processing unit 19 adds the second channel frequency corresponding to the small cell C70 in addition to the first channel frequency corresponding to the macro cell C50 under connection as a channel frequency to be used by the radio unit 12. The control information processing unit 19 performs the radio line establishing procedure with the base station 70 corresponding to the small cell C70 by using the added second channel frequency. Also, the control information processing unit 19 controls a reception processing unit and a transmission processing unit to perform processing relative to two streams respectively corresponding to the two channel frequencies. The reception processing unit includes the FFT unit 15, the demodulator 17, and the decoder 18. Also, the transmission processing unit includes the multiplexer 24, the symbol mapping unit 25, the multiplexer 26, the FFT unit 27, the frequency mapping unit 28, and the IFFT unit 29.

On the other hand, when the use mode notification information indicates the SA communication mode, the control information processing unit 19 sets the second channel frequency corresponding to the small cell C70 as the channel frequency to be used by the radio unit 12. The control information processing unit 19 performs the radio line establishing procedure with the base station 70 corresponding to the small cell C70 by using the set second channel frequency. Also, the control information processing unit 19 removes the first channel frequency corresponding to the macro cell C50 from the channel frequency to be used by the radio unit 12. That is, the control information processing unit 19 releases the connection to the macro cell C50.

The state information obtaining unit 22 obtains state information. The state information is, for example, the moving speed of the terminal 10, the traffic characteristics of the signal to be transmitted by the terminal 10, the device type of the terminal 10, and the mounting function of the terminal 10. For example, the state information obtaining unit 22 regularly obtains position information of the terminal 10 from the GPS processing unit 13 and calculates the moving speed of the terminal 10 based on the obtained position information. Also, the state information obtaining unit 22 receives a traffic volume of the signal to be transmitted by the terminal 10 from the multiplexer 24 as the traffic characteristics. Also, the state information obtaining unit 22 obtains information on the device type and the mounting function of the terminal 10 stored in a memory (not illustrated).

The state information obtaining unit 22 outputs one of or any combination of the obtained state information to the control information processing unit 19 as the state parameter.

The data processing unit 23 outputs the user data to the multiplexer 24.

The multiplexer 24 forms a multiplex signal by mapping the user data received from the data processing unit 23 and various information received from the control information processing unit 19 to a predetermined resource and outputs the formed multiplex signal to the symbol mapping unit 25.

The symbol mapping unit 25 maps the multiplex signal received from the multiplexer 24 to a symbol and outputs the obtained modulation signal to the multiplexer 26.

The multiplexer 26 multiplexes the modulation signal received from the symbol mapping unit 25 and a pilot signal and outputs the multiplex signal to the FFT unit 27.

The FFT unit 27 performs the fast Fourier transform processing relative to the multiplex signal received from the multiplexer 26 and outputs the multiplex signal to which the fast Fourier transform processing has been performed to the frequency mapping unit 28.

The frequency mapping unit 28 maps the multiplex signal received from the FFT unit 27 to a predetermined frequency and outputs the obtained transmission signal to the IFFT unit 29.

The IFFT unit 29 forms an OFDM signal by performing inverse fast Fourier transform processing relative to the transmission signal received from the frequency mapping unit 28 and outputs the formed OFDM signal to the transmitting radio unit 30.

The transmitting radio unit 30 forms a radio signal by performing predetermined transmitting radio processing, that is, digital/analog conversion, up-conversion, and the like relative to the OFDM signal received from the IFFT unit 29. Then, the transmitting radio unit 30 transmits the formed radio signal via the antenna.

The GPS processing unit 13 regularly obtains the position information of the terminal 10 and outputs the obtained position information to the state information obtaining unit 22.

### [Exemplary structure of base station]

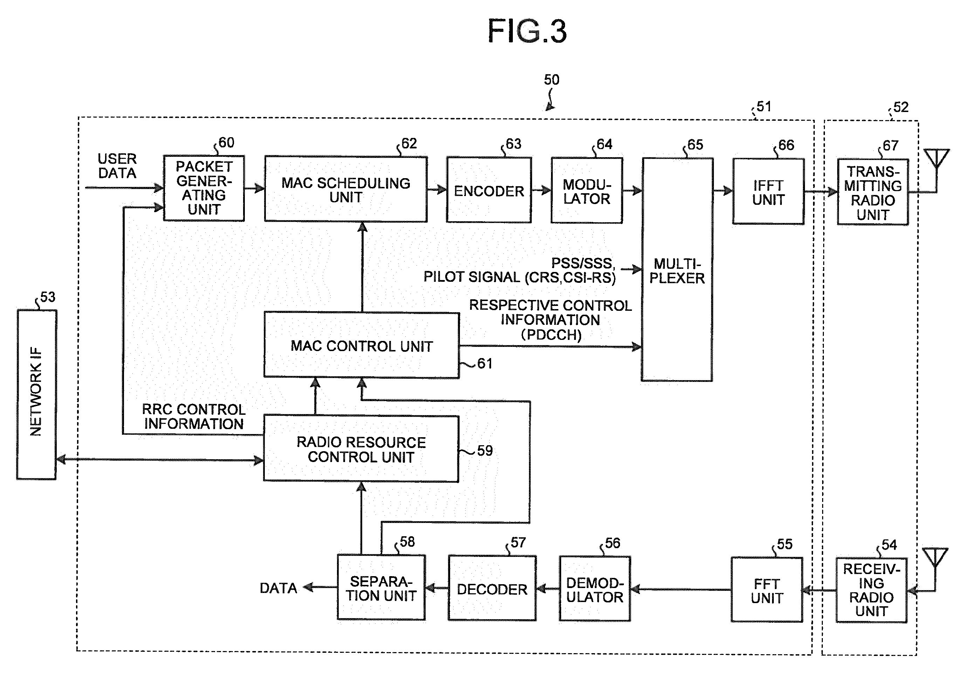

FIG. 3 is a diagram of an exemplary base station according to the first embodiment. In FIG. 3, the base station 50 includes a control unit 51, a radio unit 52, and a network interface (IF) 53. The control unit 51 includes a FFT unit 55, a demodulator 56, a decoder 57, a separation unit 58, and a radio resource control (RRC) unit 59. Also, the control unit 51 includes a packet generating unit 60, a media access control (MAC) unit 61, a MAC scheduling unit 62, an encoder 63, a modulator 64, a multiplexer 65, and an IFFT unit 66. The radio unit 52 includes a receiving radio unit 54 and a transmitting radio unit 67.

The receiving radio unit 54 performs predetermined receiving radio processing such as downconversion and analog/digital conversion relative to a reception signal received via an antenna and outputs the reception signal to which the receiving radio processing has been performed to the FFT unit 55.

The FFT unit 55 performs the fast Fourier transform processing relative to the reception signal received from the receiving radio unit 54 and outputs the reception signal to which the fast Fourier transform processing has been performed to the demodulator 56.

The demodulator 56 demodulates the reception signal received from the FFT unit 55 and outputs the demodulated reception signal to the decoder 57.

The decoder 57 decodes the reception signal received from the demodulator 56 and outputs the decoded reception signal to the separation unit 58.

The separation unit 58 extracts the control information and the reception data from the reception signal received from the decoder 57 and outputs the extracted control information to the radio resource control unit 59 and the MAC control unit 61. Also, the separation unit 58 outputs the extracted reception data to a function unit of an upper layer. Here, the control information output to the radio resource control unit 59 may include information on the desired mode. Also, the control information output to the MAC control unit 61 and the radio resource control unit 59 may include information on the received power of a reference signal transmitted by the base station 50 measured by the terminal 10. That is, the control information output to the MAC control unit 61 may include, for example, channel quality information (channel quality indicator (CQI)) reported from the terminal 10.

The radio resource control unit 59 forms the radio resource control information (that is, RRC control information) based on the control information received from the separation unit 58 and outputs the formed radio resource control information to the packet generating unit 60.

Specifically, the radio resource control unit 59 determines the use mode of the terminal 10 based on the desired mode and the information on the received power received from the separation unit 58. The radio resource control unit 59 obtains the line setting information from the base station 70 corresponding to the small cell C70 switched from the macro cell C50 under the connection to the added cell or the terminal 10 via the network IF 53. The radio resource control unit 59 outputs the obtained line setting information and the use mode notification information on the determined use mode to the packet generating unit 60 while including them in the radio resource control information. Also, the radio resource control unit 59 outputs the use mode notification information to the MAC control unit 61.

The packet generating unit 60 receives transmission data addressed to the terminal 10, that is, the user data and the radio resource control information addressed to the terminal 10 from the radio resource control unit 59 and generates a transmission packet by using the received user data and radio resource control information. The packet generating unit 60 outputs the generated transmission packet to the MAC scheduling unit 62.

The MAC control unit 61 allocates the resource used for the communication between the base station 50 and the terminal 10 based on the channel quality information (channel quality indicator (CQI)) reported from the terminal 10. The resource is defined, for example, by time and a frequency. The MAC control unit 61 outputs respective control information including information on the allocated resource (may be referred to as "allocation resource" below) to the MAC scheduling unit 62 and the multiplexer 65.

Also, when the use mode notification information received from the radio resource control unit 59 indicates the CA mode, the MAC control unit 61 continues the resource allocation processing. On the other hand, when the use mode notification information received from the radio resource control unit 59 indicates the SA communication mode, the cell used by the terminal 10 is switched from the macro cell C50 to the small cell C70. Therefore, the MAC control unit 61 terminates the resource allocation processing relative to the terminal 10 at a predetermined timing.

The MAC scheduling unit 62 outputs the packet addressed to the terminal 10 received from the packet generating unit 60 to the encoder 63 at a timing corresponding to the time allocated to the terminal 10 by the MAC control unit 61. The MAC scheduling unit 62 may divide the packet into data units of a predetermined data size and may output the data units to the encoder 63.

The encoder 63 performs encoding processing relative to the packet to be received from the MAC scheduling unit 62 and outputs the packet to which the encoding processing has been performed to the modulator 64.

The modulator 64 modulates the packet, to which the encoding processing has been performed, to be received from the encoder 63 and outputs the modulated packet to the multiplexer 65.

The multiplexer 65 multiplexes an input signal by mapping it to a predetermined resource and outputs the multiplex signal to the IFFT unit 66.

Specifically, the multiplexer 65 receives the respective control information from the MAC control unit 61 and maps it to a resource region allocated to a downlink control channel (for example, physical downlink control channel (PDCCH)).

Also, the multiplexer 65 receives the packet from the modulator 64 and maps it to the allocation resource of the downlink indicated by the respective control information.

Also, the multiplexer 65 receives the common reference signal (CRS) and the synchronisation signal (PSS and SSS) which are common in the macro cell C50. The multiplexer 65 maps the common reference signal and the synchronisation signal to a predetermined resource.

Also, the multiplexer 65 receives a reference signal for CSI measurement (that is, CSI-RS) transmitted from the base station 50 as the input signal and maps it to a predetermined resource. The common reference signal and the reference signal for the CSI measurement are pilot signals.

The IFFT unit 66 forms the orthogonal frequency division multiplexing (OFDM) signal by performing the inverse fast Fourier transform processing relative to the multiplex signal received from the multiplexer 65 and outputs the formed OFDM signal to the transmitting radio unit 67. The IFFT unit 66 may perform processing for adding a cyclic prefix (CP) to each symbol.

The transmitting radio unit 67 forms a radio signal by performing predetermined transmitting radio processing, that is, the digital/analog conversion, the up-conversion, and the like relative to the OFDM signal received from the IFFT unit 66. Then, the transmitting radio unit 67 transmits the formed radio signal via the antenna.

### [Exemplary operation of communication system]

A processing operation of the communication system 1 having the above-mentioned components will be described. The description will be made below on the presumption that the terminal 10 is connected to the macro cell C50 of the base station 50.

### <Processing for selecting desired mode>

The terminal 10 selects the desired mode by the control information processing unit 19 based on the state parameter. The state parameter may be the moving speed of the terminal 10, the traffic characteristics of the signal to be transmitted by the terminal 10, the device type of the terminal 10, or the mounting function of the terminal 10. Also, the state parameter may be any combination of those.

### (Case of moving speed)

The control information processing unit 19 selects the CA mode as the desired mode when the moving speed is equal to or faster than a predetermined value. This is because the CA mode is more advantageous in a case where the terminal 10 moves. That is, when the terminal 10 is connected to the macro cell and the small cell at the same time, the base station corresponding to the macro cell performs communication control. Therefore, even when the terminal 10 moves across the small cell in the macro cell, it is only requested to switch the small cell. That is, since it is not necessary to perform handover processing between the small cells, signaling can be reduced. In other words, the communication resources in the communication system 1 can be efficiently allocated. Whereas, when the moving speed is slower than the predetermined value, the control information processing unit 19 selects the SA communication mode as the desired mode. Accordingly, the power consumption of the terminal 10 can be more reduced than that in a case of the CA mode.

### (Case of traffic characteristics)

When the communication traffic volume is equal to or more than a predetermined value, the control information processing unit 19 selects the CA mode as the desired mode. When the communication traffic volume is less than the predetermined value, the control information processing unit 19 selects the SA communication mode as the desired mode. This is because single carrier communication is considered to be enough when the traffic volume is small. Accordingly, since the cell which is not used for the CA can be allocated to the communication of the other terminal, the efficient allocation of the communication resources in the communication system 1 can be realized. Also, by using the SA communication mode, the power consumption of the terminal 10 can be more reduced than that in a case of the CA mode.

### (Case of device type)

For example, when the terminal 10 is a machine communication (machine to machine communication) terminal, it is considered that the control information processing unit 19 has a small amount of communication data. Therefore, when the device type of the terminal 10 is the machine communication terminal, the control information processing unit 19 selects the SA communication mode as the desired mode.

### (Case of mounting function)

For example, when the terminal 10 does not originally use the CA, the control information processing unit 19 selects the SA communication mode as the desired mode. Whereas, when the terminal 10 can use the CA, the control information processing unit 19 selects the CA mode as the desired mode.

The terminal 10 transmits (notify) information on the selected desired mode to the base station 50 which is connected to the terminal 10. Here, the terminal 10 detects the cell within a range by receiving a reference signal transmitted in the cell within the range where the terminal 10 exists and transmits (notify) the cell ID of the cell within the range to the base station 50 which is connected to the terminal 10. That is, when the terminal 10 enters the small cell C70 by the movement, the terminal 10 transmits (notify) the cell ID of the detected small cell C70 to the base station 50 under the connection. The terminal 10 may transmit (notify) the cell ID of the detected small cell C70 and the information on the selected desired mode together to the base station 50 under the connection. Here, since there are two kinds of modes to be selected as the desired mode, the desired mode can be expressed by one bit.

### <Processing for measuring received power>

The terminal 10 measures the received power value of the reference signal transmitted in the macro cell C50 and the small cell C70 and transmits (notify) the measured received power value to the base station 50.

### <Determination of use mode>

The base station 50 determines the use mode of the terminal 10 by using the radio resource control unit 59 based on the information on the desired mode and the received power value transmitted from the terminal 10.

The radio resource control unit 59 obtains the line setting information from the base station 70 corresponding to the small cell C70 switched from the macro cell C50 under the connection to the added cell or the terminal 10 via the network IF 53.

The radio resource control unit 59 transmits the obtained line setting information and the use mode notification information on the determined use mode to the terminal 10 while including them in the radio resource control information. Here, since there are two kinds of modes to be determined as the use mode, the use mode notification information can be expressed by one bit.

### <Processing for adding and switching cell>

When the use mode notification information indicates the CA mode, the control information processing unit 19 of the terminal 10 adds the second channel frequency corresponding to the small cell C70 in addition to the first channel frequency corresponding to the macro cell C50 under the connection as a channel frequency to be used by the radio unit 12. The control information processing unit 19 performs the radio line establishing procedure with the base station 70 corresponding to the small cell C70 by using the added second channel frequency. Also, the control information processing unit 19 controls a reception processing unit and a transmission processing unit to perform processing relative to two streams respectively corresponding to the two channel frequencies.

When the use mode notification information indicates the SA communication mode, the control information processing unit 19 sets the second channel frequency corresponding to the small cell C70 as the channel frequency to be used by the radio unit 12. The control information processing unit 19 performs the radio line establishing procedure with the base station 70 corresponding to the small cell C70 by using the set second channel frequency. Also, the control information processing unit 19 removes the first channel frequency corresponding to the macro cell C50 from the channel frequency to be used by the radio unit 12. That is, the control information processing unit 19 releases the connection to the macro cell C50.

According to the present embodiment, the control unit 11 of the terminal 10 selects the desired mode from the CA mode and the SA communication mode based on the state of the terminal 10. The radio unit 12 transmits the information on the selected desired mode to the base station 50 corresponding to a first cell.

According to the structure of the terminal 10, the base station 50 can control the communication of the terminal 10 in consideration of the desired mode of the terminal 10. Therefore, the communication resources can be efficiently allocated.

For example, when the moving speed is equal to or faster than a predetermined value, the control unit 11 may select the CA mode as the desired mode. Accordingly, when the terminal 10 is connected to the macro cell and the small cell at the same time, the base station corresponding to the macro cell performs communication control. Therefore, even when the terminal 10 moves across the small cell in the macro cell, it is only requested to switch the small cell. That is, since it is not necessary to perform the handover processing between the small cells, the signaling can be reduced. In other words, the communication resources in the communication system 1 can be efficiently allocated. Whereas, when the moving speed is slower than the predetermined value, the control unit 11 may select the SA communication mode as the desired mode. Accordingly, the power consumption of the terminal 10 can be more reduced than that in a case of the CA mode.

Also, when the communication traffic volume is equal to or more than a predetermined value, the control unit 11 may select the CA mode as the desired mode. When the communication traffic volume is smaller than the predetermined value, the control unit 11 may select the SA communication mode as the desired mode. This is because single carrier communication is considered to be enough when the traffic volume is small. Accordingly, since the cell which is not used for the CA can be allocated to the communication of the other terminal, the efficient allocation of the communication resources in the communication system 1 can be realized. Also, by using the SA communication mode, the power consumption of the terminal 10 can be more reduced than that in a case of the CA mode.

Also, the radio unit 12 may transmit the information on the cell within the range detected by the cell search unit 16 and the information on the desired mode to the base station 50. Accordingly, the increase in the amount of the signaling can be prevented.

### [Other embodiments]

[1] In the first embodiment, the terminal 10 selects the desired mode by using the state parameter and notifies the base station 50 of the selected desired mode. However, the structure is not limited to this.

For example, the terminal 10 may notify the base station 50 of the state parameter, and the base station 50 may specify the desired mode of the terminal 10 based on the state parameter.

Also, the base station 50 may determine the use mode of the terminal 10 based on the state of the base station 50. For example, the base station 50 may determine the use mode based on the number of radio network temporary IDs (RNTI) which are not used, a load condition of the macro cell C50, the communication traffic volume of the base station 50, or any combination of those.

[2] In the first embodiment, the description has been made by assuming that the cell under the connection is the macro cell C50 and the added cell or switched cell is the small cell C70. However, the structure is not limited to this. For example, the cell under the connection may be the small cell C70, and the added cell or the switched cell may be the other small cell C70. Also, the cell under the connection may be the macro cell C50, and the added cell or the switched cell may be the other macro cell C50.

[3] In the first embodiment, description has been made on the presumption that the terminal 10 notifies the base station 50 of the information on the desired mode in a state where the terminal 10 is connected only to the macro cell C50. However, the structure is not limited to this. For example, the terminal 10 may notify the base station 50 of the information on the desired mode in a state where the terminal 10 is connected to the macro cell C50 and the small cell C70 at the same time. In this case, when receiving the use mode notification information indicating the CA mode from the base station 50, the terminal 10 is connected to the macro cell C50 and the small cell C70 at the same time in a case where the terminal 10 exists in the range of other small cell C70. On the other hand, when receiving the use mode notification information indicating the SA communication mode from the base station 50, the terminal 10 is connected only to the other small cell C70 instead of the macro cell C50 and the small cell C70 in a case where the terminal 10 exists in the range of the other small cell C70.

[4] It is not necessary for each component of each unit illustrated in the first embodiment to be physically configured as illustrated in the drawings. That is, a specific mode of separation/integration of the units is not limited to a mode illustrated in the drawings. All of or a part of the components in the drawings can be functionally or physically separated/integrated by any units according to various loads, a use condition, and the like.

In addition, all of or a part of various processing functions performed by each device may be performed by a central processing unit (CPU) (or microcomputer such as micro processing unit (MPU) and micro controller unit (MCU). Also, all of or a part of various processing functions may be performed by a program analyzed and executed by the CPU (or microcomputer such as MPU and MCU) or by a hardware according to wired logic.

The terminal and the base station according to the first embodiment can be realized, for example, by the following hardware configuration.

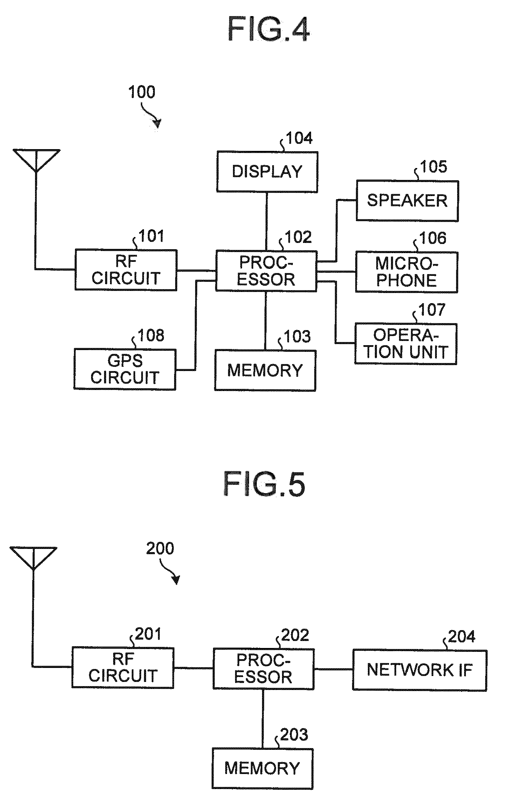

FIG. 4 is a diagram of an exemplary hardware configuration of the terminal. As illustrated in FIG. 4, a terminal 100 includes a radio frequency (RF) circuit 101, a processor 102, a memory 103, a display 104, a speaker 105, a microphone 106, an operation unit 107, and a GPS circuit 108.

As an example of the processor 102, a central processing unit (CPU), a digital signal processor (DSP), and a field programmable gate array (FPGA) can be exemplified. Also, as an example of the memory 103, random access memory (RAM) such as synchronous dynamic random access memory (SDRAM), read only memory (ROM), and flash memory can be exemplified.

Various processing functions performed by the terminal 10 according to the first embodiment may be realized by performing a program stored in various memories such as a non-volatile storage media by a processor included in an amplifying device. That is, the program corresponding to each processing performed by the control unit 11 is recorded by the memory 103, and each program may be performed by the processor 102. Also, each processing performed by the control unit 11 may be shared and performed by a plurality of processors such as a baseband CPU and an application CPU. Also, the radio unit 12 is realized by the RF circuit 101. Also, the GPS processing unit 13 is realized by the GPS circuit 108.

FIG. 5 is a diagram of an exemplary hardware configuration of the base station. As illustrated FIG. 5, a base station 200 corresponding to the macro cell includes a RF circuit 201, a processor 202, a memory 203, and a network inter face (IF) 204. As an example of the processor 202, a CPU, a DSP, and a FPGA can be exemplified. Also, as an example of the memory 203, RAM such as SDRAM, ROM, and flash memory can be exemplified.

Various processing functions performed by the base station 50 according to the first embodiment may be realized by performing the program stored in various memories such as the non-volatile storage media by the processor included in the amplifying device. That is, the program corresponding to each processing performed by the control unit 51 is recorded by the memory 203, and each program may be performed by the processor 202.

Here, the description has been made by assuming that the base station 200 is an integrated device. However, the structure is not limited to this. For example, the base station 200 may be formed by two separated devices which are a radio device and a control device. In this case, for example, the RF circuit 201 is provided in the radio device, and the processor 202, the memory 203, and the network IF 204 are provided in the control device.

### [Explanation of Reference]

- 1: communication system
- 10: terminal
- 11, 51: control unit
- 12, 52: radio unit
- 13: GPS processing unit
- 14, 54: receiving radio unit
- 15, 27, 55: FFT unit
- 16: cell search unit
- 17, 56: demodulator
- 18, 57: decoder
- 19: control information processing unit
- 20: control channel demodulator
- 21: channel state measuring unit
- 22: state information obtaining unit
- 23: data processing unit
- 24, 26, 65: multiplexer
- 25: symbol mapping unit
- 28: frequency mapping unit
- 29, 66: IFFT unit
- 30, 67: transmitting radio unit
- 50, 70: base station
- 53: network IF
- 58: separation unit
- 59: radio resource control unit
- 60: packet generating unit
- 61: MAC control unit
- 62: MAC scheduling unit
- 63: encoder
- 64: modulator

## Claims

1. A communication terminal comprising:
a control unit configured to select a desired mode from a first mode in which the communication terminal is connected to a first cell under the connection and a second cell at the same time and a second mode in which the communication terminal releases the connection to the first cell and is connected only to the second cell based on a state of the communication terminal; and
a transmission unit configured to transmit information on the selected desired mode to a base station corresponding to the first cell.

2. The communication terminal according to claim 1, wherein the state is a moving speed of the communication terminal, traffic characteristics of a signal to be transmitted from the communication terminal or a mounting function of the communication terminal or any combination thereof.

3. The communication terminal according to claim 2, wherein the control unit selects the second mode as the desired mode when the moving speed is slower than a predetermined value and selects the first mode as the desired mode when the moving speed is equal to or faster than the predetermined value.

4. The communication terminal according to claim 2, wherein the control unit selects the second mode as the desired mode when communication traffic volume of the communication terminal is smaller than a predetermined value and selects the first mode as the desired mode when the communication traffic volume is equal to or more than the predetermined value.

5. The communication terminal according to claim 1, further comprising: a detection unit configured to detect a cell within a range by receiving a reference signal transmitted in the cell within the range where the communication terminal exists, wherein
the transmission unit transmits information on the detected cell within the range and the information on the desired mode to the base station.

6. The communication terminal according to claim 1, wherein a frequency of the first cell is different from a frequency of the second cell.

7. The communication terminal according to claim 1, wherein a maximum transmitting power of the first cell is different from a maximum transmitting power of the second cell.

8. A base station comprising:
a reception unit configured to receive information on a desired mode, which indicates one of a first mode in which the base station is connected to a first cell corresponding to the base station and a second cell at the same time and a second mode in which the base station releases the connection to the first cell and is connected only to the second cell, from a communication terminal; and
a control unit configured to control communication of the communication terminal based on the desired mode.
